# EUROPÄISCHE PATENTSCHRIFT

(11) **EP 1 205 290 B1**
(45) Veröffentlichungstag und Bekanntmachung des Hinweises auf die Patenterteilung: **10.08.2005**
(21) Anmeldenummer: 01125352.3
(22) Anmeldetag: 29.10.2001
(51) Int. Cl.: B29C 44/46

(54) **Verfahren und Vorrichtung zum kontinuierlichen Herstellen von Blockschaum**
Method and apparatus for continuously producing foam blocks
Procédé et dispositif pour la fabrication en continu de blocs en mousse

(30) Priorität: 08.11.2000 DE 10055222
(43) Veröffentlichungstag der Anmeldung: 15.05.2002
(73) Patentinhaber: Hennecke GmbH, 51373 Leverkusen (DE)
(72) Erfinder: Suzbach, Hans-Michael, 53639 Königswinter (DE); Röhrig, Lothar, 53819 Neunkirchen-Seelscheid (DE); Raffel, Reiner, 53721 Siegburg (DE)
(74) Vertreter: Feldhues, Michael L.F., Dr.

(56) Entgegenhaltungen:
- GB-A- 1 354 341
- US-A- 4 264 291
- US-A- 5 656 678

## Beschreibung

Die Erfindung betrifft ein Verfahren und eine Vorrichtung zum kontinuierlichen Herstellen von Blockschaum, wobei ein flüssiges Reaktionsgemisch zugeführt, quer verteilt, ancremen und aufschäumen gelassen wird, und wobei danach der aufgeschäumte Blockschaum abgeführt wird.

Es ist beispielsweise bekannt, flüssiges Reaktionsgemisch aus Polyol und Isocyanat zur kontinuierlichen Herstellung von Polyurethan-Blockschaum dadurch herzustellen, dass man das flüssige Reaktionsgemisch in einen größeren Verteilertrog zum zeitlichen Verweilen eingibt, hinter welchem eine im Neigungswinkel einstellbare Ablaufplatte anschließt. Infolge dieses Verweilens im Verteilertrog cremt dieses Reaktionsgemisch in seinem oberen Bereich an, fließt sozusagen im "steigenden Guss" auf die Ablaufplatte über und schäumt anschließend zum Block auf (DE-OS 2 142 450, entspr. GB-PS 1 354 341). Es hat sich gezeigt, dass dieses Verfahren bzw. die zugehörige Vorrichtung für die Verarbeitung schnell reagierender chemischer Systeme nicht geeignet ist, weil der Trog dann schnell von den Totzonen, d.h. den strömungsarmen Zonen im Verteilertrog, her zuschäumt. Vor und nach jedem Schäumvorgang sind für den Verteilertrog aufwendige Reinigungs- bzw. Papierauskleidungsvorgänge erforderlich.

Nach einem anderen bekannten Verfahren ist es üblich, das flüssige Reaktionsgemisch von oben auf eine wannenförmig geformte, über eine Bodenplatte gezogene Papierfolie aufzutragen, wobei diese Papierfolie samt dem aufgetragenen, noch flüssigen Reaktionsgemisch unter einer Luftsperre hergezogen wird. Diese Luftsperre wird durch eine Führungsrolle gebildet, unter welcher eine Deckfolie herläuft (Firmenschrift "51/1" "QFM" der Firma Hennecke GmbH, D-53754 Sankt Augustin, Nr. D 9901-820 362 3T 10/98 Gö). Bei richtiger Fahrweise bildet das flüssige Reaktionsgemisch vor dieser Luftsperre einen kleinen Wulst, welcher Lufteinschlag zwischen Reaktionsgemisch und Deckfolie verhindert. Nicht verhindern lässt sich aber dadurch, dass beim Aufbringen des Reaktionsgemisches auf die untere Papierfolie in unerwünschter Weise Luft in Bläschenform in das Reaktionsgemisch eingewirbelt wird. Diese Bläschen sind später häufig Ausgangspunkt für sich bildende Lunker.

Es besteht somit die Aufgabe, ein Verfahren und eine Vorrichtung zu schaffen, mit welchen von Anfang an von Lunkern freier Block-Schaumstoff ohne jedwede Einschränkung herstellbar ist, d.h. auch solcher aus schnell reagierenden chemischen Systemen.

Diese Aufgabe wird dadurch gelöst, dass das Reaktionsgemisch von unten vor einer bzw. durch eine Bodenplatte mündet, über welcher sich das Reaktionsgemisch im wesentlichen noch in flüssigem Zustand befindet, d.h. bevor das Reaktionsgemisch sichtbar schäumt. Üblicherweise werden bei der Reaktion drei Phasen unterschieden, die Flüssigphase, die Cremephase mit deutlichem Viskositätsanstieg aufgrund der (auch sichtbaren) Schaumbildung und die Steigphase, in der im wesentlichen ein Wachstum der in der Cremephase gebildeten Mikroschaumblasen erfolgt. Erfindungsgemäß soll das Reaktionsgemisch die Bodenplatte vor Einsetzen der Cremephase erreicht haben.

Die vom Austritt aus dem Mischorgan bis zum Aufbringen auf die Bodenplatte zur Verfügung stehende Zeit beträgt erfindungsgemäß etwa 1 bis 10 Sekunden, vorzugsweise 1 bis 5 Sekunden.

Dies lässt sich ohne Schwierigkeiten durch Abstimmung der Fließ- bzw. der Fördergeschwindigkeit des Reaktionsgemisches, d.h. des Fördervolumens, in Bezug auf das bis zum Erreichen der Bodenplatte zu durchstömende Volumen einstellen.

Dadurch wird erreicht, dass das flüssige Reaktionsgemisch als Quellguss von unten auf die Bodenplatte gelangt, wodurch ein Einschlagen von Luft und damit die unerwünschte Bildung von Lunkern ausgeschlossen wird. Beim Aufbringen des Reaktionsgemisches wird Wert darauf gelegt, dass das Reaktionsgemisch, über die Schäumbreite gesehen, möglichst "gleichalt" ist. Es hat sich gezeigt, dass der Grenzbereich zwischen flüssigem und angecremtem Reaktionsgemisch schräg zur Bodenplatte nach hinten geneigt ist, so dass sich über der Bodenplatte im wesentlichen immer noch flüssiges Reaktiongemisch befindet, während es über dieser flüssigen Phase bereits cremig ist. Der flüssige Zustand des eingebrachten Reaktionsgemisches sichert eine selbsttätige gute Querverteilung, welche gegebenenfalls durch Hilfsmaßnahmen unterstützt wird, bevor die Ancremephase beginnt. Es ist natürlich möglich, den vom Mischer wegführenden Gemischstrom zu verzweigen und das Reaktionsgemisch an mehreren Stellen parallel einzutragen. Oder man führt das Reaktionsgemisch der Bodenplatte fächerförmig zu. Eine Gefahr des langsamen Zuwachsens des Eintrags- bzw. Auftragsbereiches für das Reaktionsgemisches ist hier nicht gegeben, da sich einerseits das Reaktionsgemisch noch in der flüssigen Phase befindet und andererseits auch keine strömungstoten Räume vorhanden sind. Da der entstehende Blockschaum kontinuierlich abgezogen wird, wird auch das flüssige und das teils darüber befindliche, bereits cremige Reaktionsgemisch durch das neu aufgetragene, nachdrückende Reaktionsgemisch vorwärts gefördert und hat deshalb zum Ablagern keine Zeit. Es ist alternativ auch möglich, hinter dieser Bodenplatte eine Fall Plates-Strecke anzuordnen, bevor das Transportband anschließt.

Vorzugsweise wird die Bodenplatte samt der Zuführung des Reaktionsgemisches um das in Förderrichtung des Reaktionsgemisches gelegene Ende der Bodenplatte geschwenkt.

Durch diese Maßnahme lässt sich der Verfahrensablauf insbesondere zu Beginn einstellen und später erforderlichenfalls nachregeln. Als günstig erweist sich dabei, dass der zwischen Einlass und Bodenplatte gebildete, in der Regel senkrechte Winkel beim Verändern des Neigungswinkels der Bodenplatte unverändert bleibt.

Gemäß einer besonderen Durchführungsform des neuen Verfahrens wird der Abstand der Zuführungsstelle des flüssigen Reaktionsgemisches vom in Förderrichtung gelegenen Ende der Bodenplatte eingestellt.

Dies ist vorteilhaft, um bei der Verarbeitung unterschiedlicher chemischer Komponentenrezepturen sicherzustellen, dass sich das Reaktionsgemisch oberhalb der Bodenplatte im wesentlichen noch in flüssigem Zustand befindet. Auf diese Weise lässt sich auch die Fördergeschwindigkeit berücksichtigen bzw. kompensieren. D.h., man kann den besagten Abstand insbesondere in Abgängigkeit von der Reaktionsgeschwindigkeit und/oder der Fördergeschwindigkeit nach Bedarf vergrößern oder verkleinern.

Vorzugsweise wird das eingetragene Reaktionsgemisch in seiner Standhöhe begrenzt.

Dadurch wird ein in Förderrichtung offener, ansonsten aber gegebenenfalls geschlossener Raum geschaffen, in welchem das Reaktionsgemisch zwangsläufig unter geringem Druck steht, wodurch die Querverteilung begünstigt wird, so dass über der Schäumbreite überall in etwa "gleichaltes" Reaktionsgemisch vorhanden ist.

Die neue Vorrichtung zum kontinuierlichen Herstellen von Blockschaum aus einem flüssigen Reaktionsgemisch geht aus von einem Mischer, welchem eine Bodenplatte zugeordnet ist, wobei sich in Förderrichtung hinter der Bodenplatte ein innen mit Folien abgedecktes und mit Seitenbegrenzungen versehenes Transportsystem anschließt.

Das Neue ist darin zu sehen, dass die Bodenplatte in jenem Bereich angeordnet ist, in welchem das Reaktionsgemisch über dieser Bodenplatte im wesentlichen noch flüssig ist, und dass der Einlass des flüssigen Reaktionsgemisches von unten vor der bzw. durch die Bodenplatte mündet.

Durch diese Ausgestaltung der Vorrichtung quillt das flüssige Reaktionsgemisch aus dem Einlass und verteilt sich über der Bodenplatte. Es versteht sich, dass die Austrittsgeschwindigkeit aus dem Einlass so gering gehalten wird, dass Turbulenzen, welche Lufteinschlag verursachen könnten, vermieden werden. Bei dieser Ausführungsform sind keine strömungstoten Bereiche vorhanden, in welchen das Reaktionsgemisch ausreagieren und ein Zuwachsen verursachen könnte. Wesentlich ist dabei auch, dass das Reaktionsgemisch im gesamten Eintragsbereich noch flüssig ist. Der Einlass wird in der Regel senkrecht von unten zur Bodenplatte angeordnet, kann aber auch unter einem Winkel dazu angeordnet sein. Der Einlass hat in einfachster Weise einen runden, rohrartigen Querschnitt. Insbesondere bei großen Schäumbreiten ist man darauf bedacht, dass der Einlass so gestaltet ist, dass eine sehr schnelle Querverteilung des flüssigen Gemisches stattfindet, damit das Reaktionsgemisch, über die Schäumbreite gesehen, möglichst "gleichalt" ist. Deshalb sieht man beispielsweise ein vom Mischer kommendes, sich verzweigendes Rohr vor, so dass mehrere Einlässe in der Bodenplatte angeordnet sind. Oder die Zuführung des flüssigen Reaktionsgemisches erweitert sich unterhalb der Bodenplatte zumindest über einen Teil der Schäumbreite bzw. der Bodenplatte trichterförmig, so dass der Einlass im wesentlichen die Querschnitts- bzw. Mündungsform einer Breitschlitzdüse besitzt.

Vorzugsweise ist die Bodenplatte samt dem Einlass um eine an dem in Förderrichtung gelegenen Ende der Bodenplatte angeordnete Achse schwenkbar.

Dadurch lässt sich der Anstellungswinkel der Bodenplatte einstellen.

Dieser Schwenkwinkel der Bodenplatte ist hierzu vorzugsweise zwischen -30° und +80 °, besonders bevorzugt zwischen 0° und 45°, einstellbar.

Durch Einstellen der Neigung der Bodenplatte im angegebenen Bereich lässt sich besonders einfach und wirksam die Fließgeschwindigkeit des eingetragenen flüssigen Reaktionsgemisches beeinflussen.

Besonders vorteilhaft ist gemäß einer weiteren Ausführungsform eine Einstellbarkeit des Abstandes des Einlasses von dem in Förderrichtung gelegenen Ende der Bodenplatte.

Deshalb besteht die Bodenplatte vorzugsweise aus zwei teleskopartig ineinander verschiebbaren Teilplatten.

Dadurch lässt sich in einfacher Weise die Länge dieser Bodenplatte den Anforderungen entsprechend verlängern oder verkürzen. Insbesondere lässt sich hiermit bei der Verarbeitung unterschiedlicher chemischer Rezepturen die Länge der Bodenplatte jeweils nach Bedarf einstellen. Die teleskopartige Ausbildung erfolgt beispielsweise dadurch, dass eine der beiden Platten, vorzugsweise jene weiter in Förderrichtung gelegene, ausziehbar in der anderen geführt ist. Da es sich um dünne Bleche handelt, welche in der Regel abgestützt sind, ist dies keine Schwierigkeit. Die teleskopartige Ausgestaltung lässt sich aber auch durch zwei Teilplatten, welche ineinandergreifende, abstützende Kämme aufweisen, erreichen.

Zum Erreichen dieses Ziels ist alternativ der Einlass des Reaktionsgemisches durch ein Langloch in der Bodenplatte geführt, wobei das Langloch zumindest teilweise durch ein fest mit dem Einlass verbundenes Blech abgedeckt ist.

Es versteht sich, dass das Blech abdichtend auf der Bodenplatte geführt ist. Es muss so groß bzw. so geformt sein, dass ein Durchlaufen des Reaktionsgemisches durch das Langloch bei allen vorgesehen Stellungen des Einlasses verhindert wird. Von besonderem Vorteil ist, das Abdeckblech so groß zu gestalten, dass es als teleskopartig verstellbares Teil zum Einstellen des Abstandes des Einlasses von einer nachfolgenden Basisplatte oder einem Transportband dient.

Von besonderem Vorteil ist, wenn die Bodenplatte bzw. der Einlass nach rückwärts durch eine Rücklaufsperre begrenzt ist.

Dadurch wird vermieden, dass Reaktionsgemisch nach hinten wegströmen kann. Diese Ausgestaltung ist insbesondere dann von Vorteil, wenn die Bodenplatte mit einem negativen Neigungswinkel eingestellt ist. Besitzt die Bodenplatte ein Langloch zum Verschieben eines mit einem Abdeckblech versehenen Einlasses, so ist dieses Abdeckblech vorzugsweise in Förderrichtung hinter dem Einlass hochgekantet und bildet auf diese Weise eine Rücklaufsperre. Es versteht sich, dass das hochgekantete Blech genügend breit sein muss, um zu verhindern, dass das eingetragene Reaktionsgemisch seitlich neben der Hochkantung zurückfließen kann. Bei negativem Neigungswinkel der Bodenplatte muss sich dieses Abdeckblech über die ganze Breite der Schäumfläche erstrecken, um Rückfluss zu verhindern. Eine dichte Verbindung dieses hochgekanteten Bleches mit den Seitenbegrenzungen ist zu empfehlen. Die Kombination einer Rücklaufsperre mit einer oberen Abdeckung ist bei negativem Neigungswinkel der Bodenplatte ratsam, wobei diese Abdeckung abdichtend gegen die Rücklaufsperre anliegt, um den Niveauspiegel des eingebrachten flüssigen Reaktionsgemisches zu begrenzen.

Eine weitere besondere Ausführungsform ist dadurch gekennzeichnet, dass mit Abstand über der Bodenplatte eine Abdeckung angeordnet ist.

Dadurch lässt sich das fortlaufend aufgetragene flüssige Reaktionsgemisch bei der Förderung für eine gewisse Zeit sozusagen "einschließen", wobei diese Abdeckung gegebenenfalls zumindest teilweise über die bereits cremige obere Masse reichen kann.

Vorzugsweise ist die Abdeckung einstellbar.

Sie lässt sich in einfachster Weise durch eine Führungsrolle mit darunter hergeführter Deckfolie ausbilden, wobei allerdings nur durch die Spannung der Deckfolie etwas Druck auf den entstehenden Schaumstoff ausgeübt wird. Auch eine Ausführung als stabile Gleitkufe, unter welcher eine obere Deckfolie herführbar ist, ist möglich. Oder sie ist als über Rollen umlaufendes Band ausgebildet. In diesem Fall lässt sich die obere Deckfolie in vorteilhafter Weise unter dem Band herführen.

Es gibt verschiedene Möglichkeiten der Einstellbarkeit für die Abdeckung, von denen man je nach vorgegebener Konstruktion die für das durchzuführende Verfahren jeweils günstigste Art auswählen und einstellen kann.

Gemäß einer besonderen Ausführungsform der Vorrichtung lässt sich der senkrechte Abstand der Abdeckung von der Bodenplatte einstellen, wodurch sich die Dicke der dazwischen befindlichen Zone einstellen lässt.

Gemäß einer anderen Möglichkeit lässt sich die Abdeckung parallel zur Bodenplatte verschieben. Auf diese Weise kann eingestellt werden, ab welcher oder bis zu welcher Stelle das Reaktionsgemisch abgedeckt bzw. von oben gedrückt wird.

Die Abdeckung lässt sich auch um eine Achse schwenken, wobei diese vorzugsweise in der Nähe des Einlasses angebracht ist. Eine Schwenkachse am anderen Ende der Abdeckung oder z.B. in deren Mitte ist ebenfalls möglich. Damit kann man die Dicke des darunter herfließenden Reaktionsgemisches über die Länge dieser Abdeckung unterschiedlich einstellen.

Auch eine zur Seite des Reaktionsgemisches konkav oder konvex gewölbte Abdeckung ist möglich. Eine solche Wölbung lässt sich natürlich auch einstellen, was aber sehr aufwendig ist.

Durch teleskopartige Gestaltung ist eine in der Länge veränderliche Abdeckung denkbar, z.B. ähnlich der zweigeteilten teleskopartigen Bodenplatte.

Es versteht sich, dass diese Möglichkeiten, soweit realisierbar, gewünschtenfalls auch in Kombination miteinander vorgesehen sein können.

Vorzugsweise ist die Bodenplatte und gegebenenfalls die Rücklaufsperre mit einer das Anhaften hemmenden Schutzschicht bedeckt.

Diese hat entweder mit dem Untergrund einen festen Verbund oder ist lose aufgelegt und auswechselbar.

Dies gilt sinngemäß natürlich auch für ein gegebenenfalls vorhandenes, mit dem Einlass verbundenes Abdeckblech und/oder Seitenbegrenzungen und/oder eine obere Abdeckung ohne darunter hergeführte Deckfolie.

Sofern der Einlass noch vor der Bodenplatte angeordnet ist, so lässt sich über der Bodenplatte eine mitwandernde Bodenfolie einsetzen. Auch andere mit dem Reaktionsgemisch direkt in Berührung kommende Flächen, wie jene der Seitenbegrenzungen im Bereich der Bodenplatte, lassen sich auf diese Weise schützen.

In der Zeichnung ist die neue Vorrichtung in mehreren Ausführungsbeispielen rein schematisch dargestellt. Es zeigen:
- Figur 1: die Vorrichtung gemäß einem ersten Ausführungsbeispiel im seitlichen Schnitt,
- Figur 2: verschiedene Einlassformen a bis e in der Draufsicht,
- Figur 3: die Vorrichtung gemäß einem zweiten Ausführungsbeispiel im seitlichen Schnitt,
- Figur 4: einen Auftragsbereich der Vorrichtung in vergrößertem Schnitt und
- Figur 5: die Vorrichtung gemäß einem dritten Ausführungsbeispiel im seitlichen Schnitt.

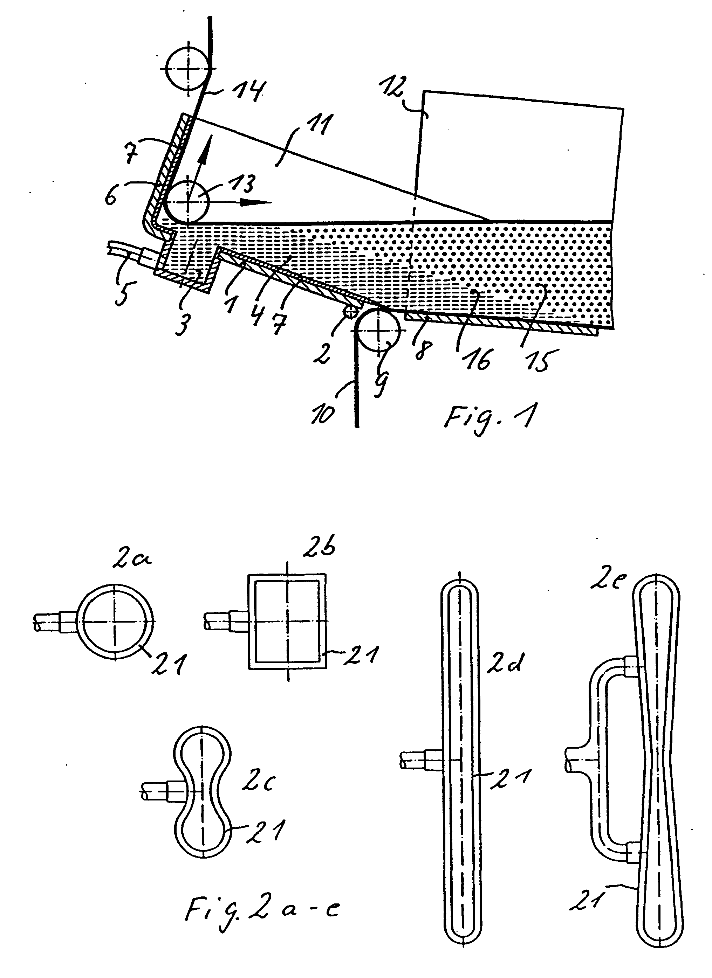

In Figur 1 stellt die Vorrichtung eine sogenannte Blockschäumanlage dar. Sie besteht aus einer Bodenplatte 1, welche um eine in Förderrichtung gelegene Achse 2 zum Einstellen einer Neigung schwenkbar ist. Eingangsseitig ist vor der Bodenplatte 1 ein von unten einmündender Einlass 3 für ein flüssiges Reaktionsgemisch 4 vorgesehen, welcher zusammen mit der Bodenplatte 1 schwenkbar ist. Von einem nicht dargestellten Mischer führt eine Zuleitung 5 in den Einlass 3. Eine Rücklaufsperre 6 sorgt dafür, dass das durch den Einlass 3 eingebrachte flüssige Reaktionsgemisch 4 nicht nach hinten weglaufen kann. Sowohl die Bodenplatte 1 als auch die Rücklaufsperre 6 sind mit einer ein Ansetzen des Reaktionsgemisches 4 verhindernden Schutzschicht 7 belegt, welche aus einem mit Silikon beschichteten Papier besteht und rückseitig mit Haftklebepunkten versehen ist. An die Bodenplatte 1 schließen sogenannte Fall Plates 8 an, wobei zwischen der Bodenplatte 1 und diesen Fall Plates 8 eine Führungsrolle 9 angeordnet ist, über welche eine trogartig gefaltete, mitlaufende Papierfolie 10 eingeführt wird. In Förderrichtung schließt sich an die Fall Plates 8 ein nicht dargestelltes Transportsystem, z.B. ein Transportband, an. Die Bodenplatte 1 ist mit Seitenbegrenzungen 11 versehen, welche teils bis über die Fall Plates 8 reichen und ebenfalls mit einer Schutzschicht 7 belegt sind. Die Fall Plates 8 sowie das nicht dargestellte Transportband sind ebenfalls mit Seitenbegrenzungen 12 versehen. Letztere sind von der mitlaufenden Papierfolie 10 belegt. Über der Bodenplatte ist eine Führungsrolle 13 angeordnet, welche eine Papierfolie 14 führt. Diese Führungsrolle 13 ist sowohl in Längsrichtung als auch in der Höhe verstellbar. Diese Papierfolie 14 deckt das flüssige Reaktionsgemisch 4 und den entstehenden Schaumstofiblock 15 ab. An den gestrichelt dargestellten flüssigen Bereich des Reaktionsgemisches 4 schließt sich ein Übergangsbereich 16 an, in welchem das Reaktionsgemisch in den Cremezustand und anschließend in den Schaumstoffblock 15 übergeht.

In Figur 2a besitzt der Einlass 21 Kreisform, in Figur 2b Rechteckform, in Figur 2c die Form eines "Knochens", in Figur 2d die Form eines sich über die Schäumbreite ersteckenden Spaltes und in Figur 2e die Form eines sich über die Schäumbreite erstreckenden Spaltes, welcher sich zu den Seiten hin erweitert und welchem das Reaktionsgemisch durch eine Verzweigung zugeführt wird.

Erfindungsgemäß beträgt das Volumen der Zuleitung 5 und des Einlasses 3 (Fig. 1) für ein für Blockschaumanlagen übliches Fördervolumen von 200 bis 600 Litern Reaktionsgemisch pro Minute zwischen 3 und 20 Liter.

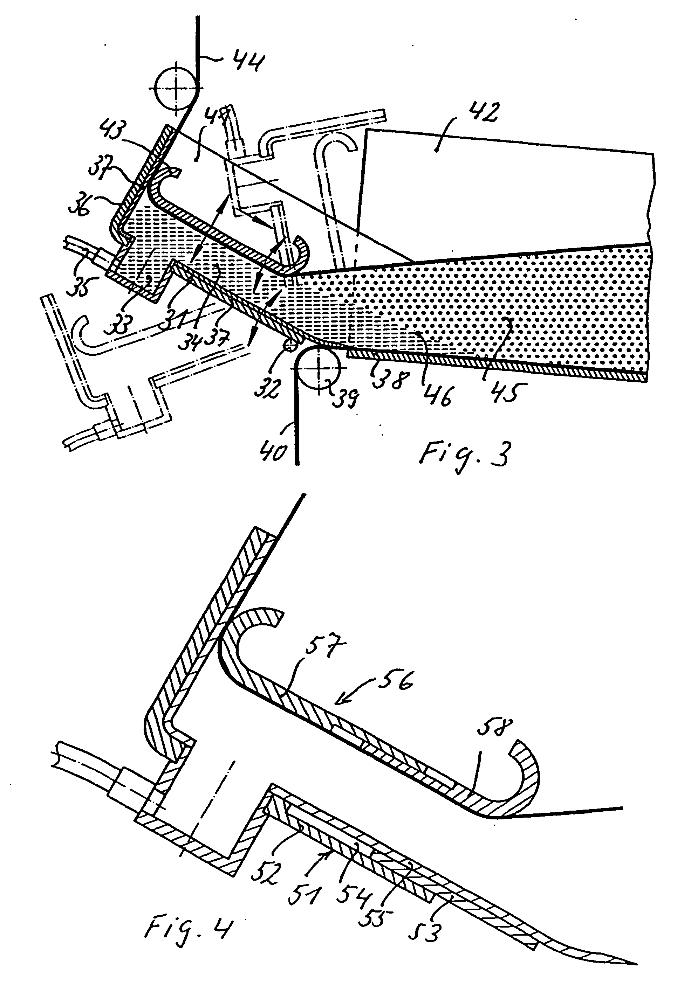

In Figur 3 besteht die Vorrichtung aus einer Bodenplatte 31, welche zum Einstellen der Neigung zwischen -30° und +80° um eine Achse 32 schwenkbar ist. Eingangsseitig ist vor der Bodenplatte 31 ein von unten einmündender Einlass 33 für ein flüssiges Reaktionsgemisch 34 vorgesehen, welcher zusammen mit der Bodenplatte 31 schwenkbar ist. Von einem nicht dargestellten Mischer führt eine Zuleitung 35 zu dem Einlass 33. Eine Rücklaufsperre 36 verhindert, dass das durch den Einlass 33 eingebrachte flüssige Reaktionsgemisch 34 nach hinten weglaufen kann. Dies ist insbesondere dann wichtig, wenn die Bodenplatte 31 auf einen negativen oder knapp positiven Winkel einstellbar ist. Sowohl die Bodenplatte 31 als auch die Rücklaufsperre 36 sind mit einer das Ansetzen des Reaktionsgemisches 34 verhindernden Schutzschicht 37 belegt, welche aus einem mit Silikon beschichteten Papier besteht und rückseitig mit Haftklebepunkten versehen ist. An die Bodenplatte 31 schließen sogenannte Fall Plates 38 an, wobei zwischen der Bodenplatte 31 und den Fall Plates 38 eine Führungsrolle 39 angeordnet ist, über welche eine trogartig gefaltete Papierfolie 40 eingeführt wird. In Förderrichtung schließt sich an die Fall Plates 38 ein nicht dargestelltes Transportband an. Die Bodenplatte 31 ist mit Seitenbegrenzungen 41 versehen, welche teils bis über die Fall Plates 38 reichen und ebenfalls mit einer Schutzschicht 37 belegt sind. Die Fall Plates 38 sowie das nicht dargestellte Transportband sind ebenfalls mit Seitenbegrenzungen 42 versehen. Letztere sind ebenfalls mit der Papierfolie 40 belegt. Über der Bodenplatte 31 ist mit der Rücklaufsperre 36 abdichtend eine als Gleitkufe 43 ausgebildete obere Abdeckung 43 angeordnet, unter welcher eine obere Papierfolie 44 hergeführt ist. Die Abdeckung 43 ist sowohl in Längsrichtung als auch in der Höhe verstellbar und auch schwenkbar. Diese Papierfolie 44 deckt das flüssige Reaktionsgemisch 34 und den entstehenden Schaumstoffblock 45 ab. An den gestrichelt dargestellten flüssigen Bereich des Reaktionsgemisches 34 schließt sich ein Übergangsbereich 46 an, in welchem das Reaktionsgemisch in den Cremezustand übergeht.

In Figur 4 entspricht die Vorrichtung im Prinzip der in Figur 3 dargestellten Vorrichtung. Die Bodenplatte 51 besteht hier aus einem fixen Teil 52 und aus einem teleskopartig ausziehbaren Teil 53, wobei diese beiden Teile 52, 53 kammartig ineinandergreifende, genügend schmale Stege 54 aufweisen, damit eine darüber angeordnete Schutzschicht 55 ausreichend gestützt ist. Dadurch lässt sich die Gesamtlänge der Bodenplatte 51 einstellen. Eine längs- und höhenverstellbare sowie auch schwenkbare Abdeckung 56 ist ebenfalls teleskopartig ausziehbar, weil sie aus zwei gegeneinander verschiebbaren Teilen 57, 58 besteht.

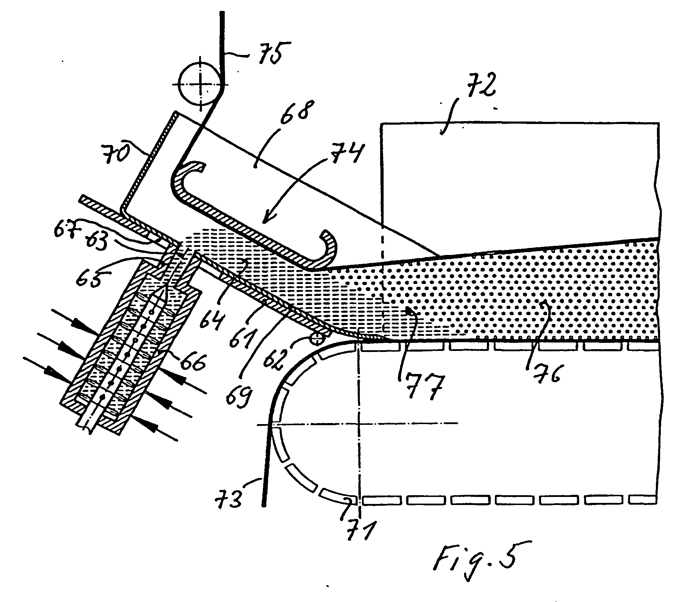

In Figur 5 besteht die Vorrichtung aus einer Bodenplatte 61, welche zum Einstellen einer Neigung zwischen -30° und +80° um eine Achse 62 schwenkbar ist. Durch diese Bodenplatte 61 hindurch mündet von unten ein Einlass 63 für ein flüssiges Reaktionsgemisch 64, welcher über einen Anschlussstutzen 65 mit einem Mischer 66 verbunden ist. Dieser Anschlussstutzen 65 ist durch ein Langloch 67 in der Bodenplatte 61 geführt. Der Einlass 63 ist mit einem sich über die gesamte Schäumbreite erstreckenden, also bis zu Seitenbegrenzungen 68 reichenden, Abdeckblech 69 versehen, welches sozusagen ein teleskopartig ausziehbares Teil 69 der Bodenplatte 61 darstellt. Dieses weist eine hochgekantete Rücklaufsperre 70 auf, welche seitlich mit den Seitenbegrenzungen 68 dicht verbunden ist. Eine das Anhaften verhindernde Schutzschicht auf den Seitenbegrenzungen 68, dem Abdeckblech 69, und der Rücklaufsperre 70 ist der besseren Deutlichkeit wegen nicht dargestellt. Die Bodenplatte 61 ist samt aller zugehörigen Teile 65, 66, 67, 68, 69, 70 schwenkbar angeordnet. An das Abdeckblech 69 schließt ein Transportband 71 an, über welches eine zum Bedecken auch von Seitenbegrenzungen 72 trogartig hochgefaltete Papierfolie 73 einläuft. Mit Abstand über der Bodenplatte 61 ist eine als Gleitkufe ausgebildete obere Abdeckung 74 angeordnet, unter welcher eine obere Papierfolie 75 hergeführt ist. Diese Abdeckung 74 ist sowohl in Längsrichtung als auch in der Höhe verstellbar und auch schwenkbar. Die Papierfolie 75 deckt dass flüssige Reaktionsgemisch 64 und den entstehenden Schaumstoffblock 76 ab. An den gestrichelt dargestellten flüssigen Bereich des Reaktionsgemisches 64 schließt sich ein Übergangsbereich 77 an, in welchem das Reaktionsgemisch in den Cremezustand und anschließend in den Schaumblock 76 übergeht.

## Patentansprüche

1. Verfahren zum kontinuierlichen Herstellen von Blockschaum 15; 45; 76), wobei ein flüssiges Reaktionsgemisch (4; 34; 64) zugeführt, quer verteilt, ancremen und aufschäumen gelassen wird, und wobei danach der aufgeschäumte Blockschaum (15; 45; 76) abgeführt wird, **dadurch gekennzeichnet, dass** das Reaktionsgemisch (4; 34; 64) von unten vor einer bzw. durch eine Bodenplatte (1; 31; 51; 61) mündet, über welcher sich das Reaktionsgemisch (4; 34; 64) im wesentlichen noch in flüssigem Zustand befindet.

2. Verfahren nach Anspruch 1, **dadurch gekennzeichnet, dass** die Bodenplatte (1; 31; 51; 61) samt der Zuführung (5; 35) des Reaktionsgemisches um das in Förderrichtung des Reaktionsgemisches (4; 34; 64) gelegene Ende der Bodenplatte (1; 31; 61) geschwenkt wird.

3. Verfahren nach Anspruch 1 oder 2, **dadurch gekennzeichnet, dass** der Abstand zwischen der Mündungsstelle (3; 21; 33; 63) des flüssigen Reaktionsgemisches (4; 34; 64) und dem in Förderrichtung gelegenen Ende der Bodenplatte (1; 3; 61) eingestellt wird.

4. Verfahren nach den Ansprüchen 1, 2 oder 3, **dadurch gekennzeichnet, dass** das eingetragene flüssige Reaktionsgemisch (4; 34; 64) in seiner Standhöhe begrenzt wird.

5. Vorrichtung zum kontinuierlichen Herstellen von Blockschaum (15; 45; 76) aus einem flüssigen Reaktionsgemisch (4; 34; 64), bestehend aus einem Mischer (66), welchem eine Bodenplatte (1; 31; 51; 61) zugeordnet ist, wobei in Förderrichtung hinter der Bodenplatte (1; 31; 51; 61) ein innen mit Folien (10; 40; 73) abgedecktes und mit Seitenbegrenzungen (12; 52; 72) versehenes Transportsystem (71) anschließt, **dadurch gekennzeichnet, dass** die Bodenplatte (1; 31; 51; 61) in jenem Bereich (4; 34; 64) angeordnet ist, in welchem das Reaktionsgemisch (4; 34; 64) über dieser Bodenplatte (1; 31; 51; 61) im wesentlichen noch flüssig ist, und dass der Einlass (3; 21; 33; 63) des flüssigen Reaktionsgemisches (4; 34; 64) von unten vor der bzw. durch die Bodenplatte (1; 31; 51; 61) mündet.

6. Vorrichtung nach Anspruch 5, **dadurch gekennzeichnet, dass** die Bodenplatte (1; 31; 51; 61) samt dem Einlass (31; 63) um eine an dem in Förderrichtung gelegenen Ende der Bodenplatte (1; 31; 51; 61) angeordnete Achse (2; 32; 62) schwenkbar ist.

7. Vorrichtung nach Anspruch 6, **dadurch gekennzeichnet, dass** der Schwenkwinkel α der Bodenplatte (1; 31; 51; 6) zwischen -30° und +80 °, vorzugsweise zwischen 0° und 45°, einstellbar ist.

8. Vorrichtung nach einem der Ansprüche 5 bis 7, **dadurch gekennzeichnet, dass** der Abstand zwischen dem Einlass (3; 33; 63) für das Reaktionsgemisch (4; 34; 64) von dem in Förderrichtung gelegenen Ende der Bodenplatte (1; 31; 61) einstellbar ist.

9. Vorrichtung nach Anspruch 8, **dadurch gekennzeichnet, dass** die Bodenplatte (51; 61) aus zwei teleskopartig ineinander verschiebbaren Teilplatten (52; 53; 61; 69) besteht.

10. Vorrichtung nach Anspruch 8, **dadurch gekennzeichnet, dass** der Einlass (61) des Reaktionsgemisches (64) durch ein Langloch (67) in der Bodenplatte (61) geführt ist, wobei das Langloch (67) durch ein fest mit dem Einlass (63) verbundenes Abdeckblech (69) abgedeckt ist.

11. Vorrichtung nach einem der Ansprüche 5 bis 10, **dadurch gekennzeichnet, dass** mit Abstand über der Bodenplatte (31; 51; 61) eine Abdeckung (43; 56; 74) angeordnet ist.

12. Vorrichtung nach Anspruch 11, **dadurch gekennzeichnet, dass** die obere Abdeckung (43; 56; 74) einstellbar ist.

13. Vorrichtung nach einem der Ansprüche 4 bis 12, **dadurch gekennzeichnet, dass** die Bodenplatte (1; 31; 61) bzw. der Einlass (3; 33; 63) für das Reaktionsgemisch (4; 34; 64) nach rückwärts durch eine Rücklaufsperre (6; 36; 70) begrenzt ist.

14. Vorrichtung nach einem der Ansprüche 4 bis 13, **dadurch gekennzeichnet, dass** die Bodenplatte (1; 31; 51) mit einer das Anhaften hemmenden Schutzschicht (7; 37; 55) bedeckt ist.

## Claims

1. Process for the continuous production of slabstock foam (15, 45, 76), in which a liquid reaction mixture (4, 34, 64) is fed, distributed transversely, and allowed to cream and foam, and in which the expanded slabstock foam (15, 45, 76) is then removed, **characterised in that** the reaction mixture (4, 34, 64) discharges from underneath in front of and/or through a floor plate (1, 31, 51, 61) above which the reaction mixture (4, 34, 64) is substantially still in the liquid state.

2. Process according to claim 1, **characterised in that** the floor plate (1, 31, 51, 61) together with the feed means (5, 35) for the reaction mixture is swivelled about the end of the floor plate (1, 31, 61) lying in the conveying direction of the reaction mixture (4, 34, 64).

3. Process according to claim 1 or 2, **characterised in that** the distance between the discharge site (3, 21, 33, 63) of the liquid reaction mixture (4, 34, 64) and the end of the floor plate (1, 3, 61) lying in the conveying direction is adjusted.

4. Process according to claims 1, 2 or 3, **characterised in that** the introduced liquid reaction mixture (4, 34, 64) is restricted as regards its height.

5. Apparatus for the continuous production of slabstock foam (15, 45, 76) from a liquid reaction mixture (4, 34, 64), consisting of a mixer (66) that is associated with a floor plate (1, 31, 51, 61), wherein a transporting system (71) lined with films (10, 40, 73) and provided with lateral boundaries (12, 52, 72) is connected in the conveying direction behind the floor plate (1, 31, 51, 61), **characterised in that** the floor plate (1, 31, 51, 61) is arranged **in that** region (4, 34, 64) in which the reaction mixture (4, 34, 64) above this floor plate (1, 31, 51, 61) is still substantially liquid, and that the inlet (3, 21, 33, 63) for the liquid reaction mixture (4, 34, 64) discharges from underneath in front of and/or through the floor plate (1, 31, 51, 61).

6. Apparatus according to claim 5, **characterised in that** the floor plate (1, 31, 51, 61) together with the inlet (31, 63) can swivel about a shaft (2, 32, 62) arranged on the end of the floor plate (1, 31, 51, 61) lying in the conveying direction.

7. Apparatus according to claim 6, **characterised in that** the angle of swivel α of the floor plate (1, 31, 51, 61) is adjustable between -30° and +80°, preferably between 0° and 45°.

8. Apparatus according to one of claims 5 to 7, **characterised in that** the distance between the inlet (3, 33, 63) for the reaction mixture (4, 34, 64) and the end of the floor plate (1, 31, 51, 61) lying in the conveying direction can be adjusted.

9. Apparatus according to claim 8, **characterised in that** the floor plate (51, 61) consists of two partial plates (52, 53, 61, 69) that can be telescopically displaced towards one another.

10. Apparatus according to claim 8, **characterised in that** the inlet (61) for the reaction mixture (64) is guided through a longitudinal hole (67) in the floor plate (61), the said longitudinal hole (67) being covered by a metal cover sheet (69) rigidly connected to the inlet (63).

11. Apparatus according to one of claims 5 to 10, **characterised in that** a covering (43, 56, 74) is arranged at a distance above the floor plate (31, 51, 61).

12. Apparatus according to claim 11, **characterised in that** the upper covering (43, 56, 74) can be adjusted.

13. Apparatus according to one of claims 4 to 12, **characterised in that** the floor plate (1, 31, 61) and/or the inlet (3, 33, 63) for the reaction mixture (4, 34, 64) is bounded at the rear by means of a return stop (6, 36, 70).

14. Apparatus according to one of claims 4 to 13, **characterised in that** the floor plate (1, 31, 51) is lined with a protective layer (7, 37, 55) preventing adhesion.

## Revendications

1. Procédé pour la fabrication en continu de mousse en bloc (15 ; 45 ; 76), un mélange de réaction (4 ; 34 ; 64) liquide étant amené, réparti transversalement, transformé en crème et moussé, et la mousse en bloc (15 ; 45 ; 76) moussée étant ensuite évacuée, **caractérisé en ce que** le mélange de réaction (4 ; 34 ; 64) débouche par en bas devant ou à travers une plaque de fond (1 ; 31 ; 51 ; 61), au-dessus de laquelle le mélange de réaction (4 ; 34 ; 64) se trouve essentiellement encore dans l'état liquide.

2. Procédé selon la revendication 1, **caractérisé en ce que** la plaque de fond (1 ; 31 ; 51 ; 61) avec l'arrivée (5 ; 35) du mélange de réaction est basculée autour d'une extrémité, située dans le sens de transport du mélange de réaction (4 ; 34 ; 64), de la plaque de fond (1 ; 31 ; 61).

3. Procédé selon la revendication 1 ou 2, **caractérisé en ce que** la distance entre le débouché (3 ; 21 ; 33 ; 63) du mélange de réaction (4 ; 34 ; 64) liquide et l'extrémité, située dans le sens de transport, de la plaque de fond (1 ; 3 ; 61) est réglée.

4. Procédé selon les revendications 1, 2 ou 3, **caractérisé en ce que** le mélange de réaction (4 ; 34 ; 64) liquide est délimité dans sa hauteur verticale.

5. Dispositif pour la fabrication en continu de mousse en bloc (15 ; 45 ; 76) à partir d'un mélange de réaction (4 ; 34 ; 64) liquide, comprenant un mélangeur (66), auquel est attribuée une plaque de fond (1 ; 31 ; 51 ; 61), un système de transport (71) revêtu à l'intérieur de films (10 ; 40 ; 73) et pourvu de délimitations latérales (12 ; 52 ; 72) faisant suite dans le sens de transport derrière la plaque de fond (1 ; 31 ; 51 ; 61), **caractérisé en ce que** la plaque de fond (1 ; 31 ; 51 ; 61) est disposée dans la zone (4 ; 34 ; 64) dans laquelle le mélange de réaction (4 ; 34 ; 64) est essentiellement encore liquide au-dessus de cette plaque de fond (1 ; 31 ; 51 ; 61), et **en ce que** l'entrée (3 ; 21 ; 33 ; 63) du mélange de réaction (4 ; 34 ; 64) liquide débouche par le bas devant ou à travers la plaque de fond (1 ; 31 ; 51 ; 61).

6. Dispositif selon la revendication 5, **caractérisé en ce que** la plaque de fond (1 ; 31 ; 51 ; 61) avec l'entrée (31 ; 63) peut basculer autour d'un axe (2 ; 32 ; 62) disposé sur l'extrémité, située dans le sens de transport, de la plaque de fond (1 ; 31 ; 51 ; 61).

7. Dispositif selon la revendication 6, **caractérisé en ce que** l'angle de pivotement α de la plaque de fond (1 ; 31 ; 51 ; 61) peut être réglé entre -30° et +80°, de préférence entre 0° et 45°.

8. Dispositif selon l'une quelconque des revendications 5 à 7, **caractérisé en ce que** la distance entre l'entrée (3 ; 33 ; 63) pour le mélange de réaction (4 ; 34 ; 64) à l'extrémité, située dans le sens de transport, de la plaque de fond (1 ; 31 ; 61) est réglable.

9. Dispositif selon la revendication 8, **caractérisé en ce que** la plaque de fond (51 ; 61) se compose de deux plaques partielles (52 ; 53 ; 61 ; 69) pouvant coulisser l'une dans l'autre de façon télescopique.

10. Dispositif selon la revendication 8, **caractérisé en ce que** l'entrée (61) du mélange de réaction (64) est guidée à travers un trou oblong (67) dans la plaque de fond (61), le trou oblong (67) étant recouvert par une tôle de revêtement (69) reliée de façon fixe à l'entrée (63).

11. Dispositif selon l'une quelconque des revendications 5 à 10, **caractérisé en ce qu'**un revêtement (43 ; 56 ; 74) est disposé à distance au-dessus de la plaque de fond (31 ; 51 ; 61).

12. Dispositif selon la revendication 11, **caractérisé en ce que** le revêtement (43 ; 56, 74) supérieur est réglable.

13. Dispositif selon l'une quelconque des revendications 4 à 12, **caractérisé en ce que** la plaque de fond (1 ; 31 ; 61) ou l'entrée (3 ; 33 ; 63) pour le mélange de réaction (4 ; 34 ; 64) est délimitée vers l'arrière par un blocage d'inversion (6 ; 36 ; 70).

14. Dispositif selon l'une quelconque des revendications 4 à 13, **caractérisé en ce que** la plaque de fond (1 ; 31 ; 51) est revêtue d'une couche de protection (7 ; 37 ; 55) supprimant l'adhérence.
